# EUROPÄISCHE PATENTSCHRIFT

(11) **EP 1 347 250 B1**
(45) Veröffentlichungstag und Bekanntmachung des Hinweises auf die Patenterteilung: **19.04.2006**
(21) Anmeldenummer: 03002437.6
(22) Anmeldetag: 05.02.2003
(51) Int. Cl.: F24J 2/05, F24J 2/46

(54) **Kollektormodul**
Collector module
Module collecteur

(30) Priorität: 19.03.2002 DE 10212977
(43) Veröffentlichungstag der Anmeldung: 24.09.2003
(73) Patentinhaber: Schott AG, 55122 Mainz (DE)
(72) Erfinder: Haas, Gottfried, 95643 Tirschenreuth (DE); Benz, Nikolaus, Dr., 92637 Weiden (DE); Quast, Klaus, 95666 Mitterteich (DE); Reinhard, Michael, Dr., 55270 Ober-Olm (DE); Schünzel, Frank, 95659 Arzberg (DE)
(74) Vertreter: Fuchs Mehler Weiss & Fritzsche

(56) Entgegenhaltungen:
- DE-A1- 10 011 812
- DE-C1- 4 308 626
- DE-U1- 20 101 139
- US-A- 4 033 327
- PATENT ABSTRACTS OF JAPAN Bd. 009, Nr. 149 (M-390), 25. Juni 1985 (1985-06-25) -& JP 60 026245 A (NEPON KK), 9. Februar 1985 (1985-02-09)

## Beschreibung

Die Erfindung betrifft einen Kollektormodul mit einer zwei Kammern aufweisenden Sammeleinrichtung, insbesondere Sammelrohr, die mindestens einen senkrecht zur Sammeleinrichtung angeordneten Nippel aufweist, mit mindestens einem Kollektorrohr, das ein Hüllrohr und ein Absorberrohr aufweist, wobei das Absorberrohr auf den Nippel aufgesteckt ist und im Nippel ein Koaxialrohr angeordnet ist, das einerseits im Absorberrohr und andererseits in der Sammeleinrichtung fixiert ist, und mit einem die Sammeleinrichtung umgreifenden und das offene Ende des Hüllrohrs aufnehmenden Verbindungselement.

Aus dem Gebrauchsmuster G 201 01 139 ist ein solches Kollektormodul bekannt. Das Kollektorrohr wird mit seinem Absorberrohr auf den Nippel aufgesteckt. Auch das Verbindungselement ist derart ausgebildet, daß das Kollektorrohr eingesteckt werden kann. Alle Komponenten sind somit über Steckverbindungen miteinander verbunden. Dadurch soll gewährleistet werden, daß bei thermischen Ausdehnungen eine gewisse Beweglichkeit vorhanden ist. Es werden verschiedene Varianten beschrieben, die sich unter anderem auf eine kraftschlüssige und eine formschlüssige Aufnahme des Kollektorrohrs im Verbindungselement beziehen.

Obwohl das Kollektorrohr im Verbindungselement, das dort als Gehäuse bezeichnet wird, fixiert ist, kann ein Verdrehen des Kollektorrohrs nicht vollständig ausgeschlossen werden. Das Gehäuse nimmt sämtliche Kollektorrohre auf und bildet somit einen starren Rahmen. Die damit einhergehenden Nachteile bestehen darin, daß auf die Kollektorrohre nicht nur die unvermeidbaren Anpreßkräfte über die O-Ringe der Nippel und der hydraulische Druck der Wärmeträgerflüssigkeit wirken, sondern auch äußere Kräfte aufgrund der Wärmedehnung des Sammelrohrs im starren Gehäuse einwirken, weil das Gehäuse senkrecht zum Nippel auf das Kollektorrohr drückt. Derartige Kräfte können auch bei Transport oder Montage auftreten. Bei vorhandener Bewegungsfreiheit kann es auch zu einem Verkippen des in das Kollektorrohr eingeschobenen Nippels kommen. Diese Kräfte, die immer auf die sensible Anschlußstelle zwischen Nippel und Kollektorrohr wirken, können das Bruchrisiko für das Kollektorrohr erhöhen. Zudem sorgt die geforderte Bewegungsfreiheit dafür, daß die für eine selbsttragende, rahrnenlose Konstruktion des Moduls geforderte Steifigkeit nicht ohne Weiteres gewährleistet werden kann.

Ausgehend von diesem bekannten Köllektörmodul ist es Aufgabe der Erfindung, dieses Kollektormodul derart zu verbessern, daß eine torsionssteife selbsttragende Einrichtung geschaffen wird und die Kollektorrohre - insbesondere im Anschlußbereich zur Sammeleinrichtung - nicht durch äußere Kräfte, ausgelöst durch Wärmedehnung, Transport, Montage usw., belastet werden.

Diese Aufgabe wird dadurch gelöst, daß für jedes Kollektorrohr ein eigenes Verbindungselement vorgesehen ist, das ein tassenförmiges Aufnahmeelement aufweist, in das das Hüllrohr eingeklebt ist, daß am tassenförmigen Aufnahmeelement ein U-förmiges Befestigungselement angeformt ist, das die Sammeleinrichtung umgreift, und daß am Befestigungselement eine Verschlußeinrichtung angeordnet ist.

Dadurch, daß für jedes Kollektorrohr ein eigenes Verbindungselement vorgesehen ist, werden äußere Kräfte, z.B. aufgrund der Wärmedehnung der Sammeleinrichtung nicht auf die Rohre selbst übertragen. Bei Längenänderungen der Sammeleinrichtung verändert sich allenfalls der Abstand der Kollektorrohre zueinander, oder die Verbindungselemente verschieben sich längs der Sammeleinrichtung.

Die Verschlußeinrichtung ist derart ausgestaltet und am Befestigungselement angeordnet, daß die Sammeleinrichtung, insbesondere das Sammelrohr, zwischen dem Befestigungselement und der Verschlußeinrichtung entweder klemmend oder verschiebbar gehalten wird, wobei in beiden Fällen eine torsionssteife Verbindung mit der Sammeleinrichtung hergestellt wird. Eine klemmende oder verschiebliche Befestigung wird über die Innenabmessungen von Befestigungselement und Verschlußeinrichtung in bezug auf die Außenabmessungen der Sammeleinrichtung eingestellt.

Die Verschlußeinrichtung kann gemäß einer weiteren Ausführungsform derart ausgebildet sein, daß sie geöffnet und geschlossen werden kann, so daß ein Austausch einzelner Rohre möglich ist.

Das Einkleben des Kollektorrohres in das tassenförmige Aufnahmeelement verhindert, daß der hydraulische Druck das Kollektorrohr vom Nippel abzieht. Zudem wird eine Verdrehung des Kollektorrohres um die Mittelachse des Nippels verhindert. Des weiteren wird die Abdichtung des Absorberrohres, die am Nippel mittels eines oder zweier O-Ring erfolgt, nicht durch äußere Kräfte belastet, was die Betriebssicherheit und die Langlebigkeit erhöht. Als äußere Kräfte sind all die Kräfte anzusehen, die nicht parallel zur Nippelachse gerichtet sind, wie z.B. Schneelasten, unsachgemäße Montage usw..

Vorzugsweise ist das Kollektorrohr derart in das tassenförmige Aufnahmeelement eingeklebt, daß der gesamte Ringspalt zwischen Kollektorrohr und der das Kollektorrohr umgreifenden Wand über den gesamten Umfang ausgefüllt ist. Es wird vorteilhafterweise ein Klebstoff verwendet, der beim Aushärten nur wenig schrumpft, um Rißbildungen oder Ablösungen zu vermeiden. Insbesondere kommt ein ein- oder zweikomponentiger Klebstoff auf Silikonbasis hierfür in Frage.

Obwohl das Kollektorrohr in das tassenförmige Aufnahmeelement eingeklebt ist, sorgt diese Klebung in Verbindung mit der O-Ringdichtung am Nippel dennoch für eine ausreichende Elastizität der Verbindung, so daß das Bruchrisiko bei Montage und Betrieb vermindert wird.

Ein weiterer Vorteil der Verklebung des Kollektorrohres im tassenförmigen Aufnahmeelement besteht darin, daß im Falle eines Bruchs des inneren Rohres (Koaxialrohr) im Absorberrohr die Wärmeträgerflüssigkeit in jedem Fall, also auch bei Brüchen am Nippel, zunächst in den Hohlraum fließt, den das Hüllrohr bildet. Ein Austritt des Wärmeträgers aus dem System wird damit wirksam verhindert.

Des weiteren sorgt die Verklebung dafür, daß die notwendige Haltekraft gleichmäßig über den Umfang des Kollektorrohres verteilt wird. Ungleichmäßigkeiten, die auf kleine produktionsbedingte Rohrkrümmungen zurückzuführen sind, werden ausgeglichen.

Das Verbindungselement kommt nicht in Kontakt mit dem Wärmeträger und ist somit keinen chemischen Angriffen ausgesetzt. Dies erlaubt die Verwendung von meist auch kostengünstigeren Kunststoffmaterialien, die zwar temperaturbeständig, aber anfällig bei Kontakt mit Wärmeträgerfluiden sind, wie z.B. glasfaserverstärktes Polyamid.

Vorzugsweise ist die Verschlußeinrichtung ein in Längsrichtung des Sammelrohres beweglicher Schieber. Vorzugsweise sind am freien Ende der beiden Schenkel des U-förmigen Befestigungselementes Verriegelungselemente angeordnet, die mit Verriegelungselementen des Schiebers zusammenwirken.

Diese Verriegelungselemente können beispielsweise aus Nut und Feder bestehen, die sich vorzugsweise in Längsrichtung der Sammeleinrichtung erstrecken.

Eine andere Ausführungsform sieht vor, daß die Verschlußeinrichtung ein am Befestigungselement angelenktes Schwenkelement ist. Dieses Schwenkelement wird beim Öffnen vorzugsweise um eine in Längsrichtung zur Sammeleinrichtung angeordnete Schwenkachse ausgeschwenkt, so daß ein Austausch des Kollektorrohres zusammen mit dem Verbindungselement möglich ist. Das Vorsehen eines Schwenk- oder Klappelementes hat den Vorteil, daß die Verschlußeinrichtung am Befestigungselement verbleibt und somit bei einem Austausch nicht verloren gehen kann. Dieses Schwenkelement ist vorzugsweise an einem Schenkel des U-förmigen Befestigungselementes mittels eines Scharnieres angelenkt und rastet in ein entsprechendes Element am gegenüberliegenden Schenkel des U-förmigen Befestigungselementes ein. Auch dieses Schwenkelement ist derart ausgebildet, daß im verriegelten Zustand die Sammeleinrichtung klemmend oder verschiebbar gehalten wird.

Vorzugsweise ist die sich in Längsrichtung der Sammeleinrichtung erstreckende Breite des U-förmigen Befestigungselementes kleiner als der Außendurchmesser des tassenförmigen Aufnahmeelementes. Die Breite darf allerdings nicht so gering gewählt werden, daß keine torsionssteife Verbindung gewährleistet ist. Vorzugsweise liegt die Breite B des Befestigungselements im Bereich von D/3 bis D, wobei D den Durchmesser des tassenförmigen Aufnahmeelements bezeichnet.

Der in Längsrichtung der Sammeleinrichtung beanspruchte Platzbedarf wird somit durch das tassenförmige Aufnahmeelement vorgegeben. Dies hat den Vorteil, daß zwischen den Befestigungselementen an der Sammeleinrichtung ein Freiraum verbleibt, so daß dort problemlos zwei Sammeleinrichtungen miteinander verbunden werden können, ohne daß dies zu einem deutlich größeren Abstand der Kollektorrohre führt. Die Verbindung zwischen zwei Kollektormodulen führt somit nicht zu einem wesentlich größeren Rohrabstand als dies innerhalb des Moduls der Fall ist. Diese äquidistanten Rohrabstände im Kollektorfeld machen die Gesamtanordnung aus mehreren Kollektormodulen weitaus kompakter und erhöhen damit die auf die Bruttofläche bezogenen Wärmeerträge.

Vorzugsweise weisen die tassenförmigen Aufnahmeelemente an der Außenseite ihrer in Richtung der Sammeleinrichtung gegenüberliegenden Seitenwände Verriegelungselemente auf, die mit Verriegelungselementen eines benachbarten tassenförmigen Aufnahmeelementes zusammenwirken. Die Kollektorrohre werden mit ihren Verbindungselementen soweit aneinander geschoben, daß benachbarte Seitenwände der tassenförmigen Aufnahmeelemente aneinanderliegen. Durch die gegenseitige Verriegelung wird die Torsionssteifigkeit deutlich erhöht. In diesem Fall sind Verschluß- und Befestigungselement vorzugsweise derart ausgebildet, daß die Sammeleinrichtung verschiebbar gehalten ist.

Gleichzeitig erlauben diese Verriegelungselemente auch ein problemloses Lösen, insbesondere dann, wenn diese Verriegelungselemente beispielsweise aus Nut und Feder bestehen, die sich in Längsrichtung der Kollektorrohre erstrecken. Beim Austausch eines Kollektorrohres wird die Verschlußeinrichtung geöffnet und das Kollektorrohr mit dem Verbindungselement in Längsrichtung des Kollektorrohres verschoben, wobei die Verriegelungselemente des tassenförmigen Aufnahmeelementes aus den Verriegelungselementen der benachbarten tassenförmigen Aufnahmeelemente herausrutschen. Ebenso einfach kann auch ein neues Kollektorrohr mit dem entsprechenden Verbindungselement eingebaut werden.

Vorzugsweise ist am Verbindungselement im Übergangsbereich vom tassenförmigen Aufnahmeelement und U-förmigen Befestigungselement ein Dachbefestigungselement angeordnet, das vorzugsweise aus mindestens einem Ringelement mit senkrecht zur Längsachse des Verbindungselementes angeordneter Lochöffnung besteht. Durch diese Lochöffnung wird ein Bolzen oder dergleichen gesteckt und befestigt, der wiederum über eine geeignete Haltevorrichtung die Verbindung zum Dach herstellt.

Um die Torsionssteifigkeit weiter zu erhöhen, ist am geschlossenen Ende jedes Kollektorrohres eine Fußkappe aufgeklebt. Diese Fußkappen weisen ähnlich wie die tassenförmigen Aufnahmeelemente an der Außenseite ihrer gegenüberliegenden Seitenwände Verriegelungselemente auf, die mit Verriegelungselementen benachbarter Fußkappen zusammenwirken. Vorzugsweise handelt es sich bei diesen Verriegelungselementen ebenfalls um Nuten und Federn, die vorzugsweise in Längsrichtung des Kollektorrohres angeordnet sind, so daß bei einem Austausch eines Kollektorrohres mit einer einzigen Bewegung die Verriegelungen der tassenförmigen Aufnahmeelemente und die Verriegelungen der Fußkappen gelöst werden.

Die Fußkappe besitzt vorzugsweise einen Sockel mit Halteelementen, mit denen die Fußkappen in eine entsprechende Befestigung auf dem Dach eingreifen. Diese Halteelemente greifen vorzugsweise in eine entsprechende Schiene ein, die auf dem Dach befestigt ist. Die Anordnung wird vorzugsweise so gewählt, daß ebenfalls Längenausdehnungen durch ein Verschieben der Sockel kompensiert werden.

Des weiteren besitzt die Fußkappe noch eine Ablauföffnung, damit Regenwasser bei schräger Anordnung der Kollektormodule problemlos ablaufen kann.

Beispielhafte Ausführungsformen der Erfindung werden nachfolgend anhand der Zeichnungen näher erläutert. Es zeigen:
- Fig. 1: ein Kollektormodul mit Kollektorrohren, Verbindungselementen und Fußkappen,
- Fig. 2: eine Ausschnittvergrößerung des Kollektormoduls im Bereich der Verbindungselemente,
- Fig. 3: einen Längsschnitt durch ein Kollektorrohr mit Verbindungselement und Fußkappe,
- Fig. 4: eine perspektivische Ansicht eines Verbindungselementes mit Verschlußeinrichtung,
- Fig. 5: einen Schnitt durch das in Fig. 4 gezeigte Verbindungselement,
- Fig. 6: eine Unteransicht eines Abschnittes des Kollekiormoduls mit der Dachbefestigungseinrichtung,
- Fig. 7: eine Draufsicht auf die in Fig. 6 gezeigte Dachbefestigungseinrichtung,
- Fig. 8: eine Seitenansicht des Kollektormoduls mit den entsprechenden Dachbefestigungseinrichtungen,
- Fig. 9: eine perspektivische Ansicht einer Fußkappe,
- Fig. 10: einen Schnitt längs der Linie X-X der in Fig. 9 gezeigten Fußkappe,
- Fig. 11: die Verbindung zweier Kollektormodule im Schnitt,
- Fig. 12a+b: einen Schnitt durch ein Verbindungselement mit einer Verschlußeinrichtung gemäß einer weiteren Ausführungsform im geöffneten und im geschlossenen Zustand.

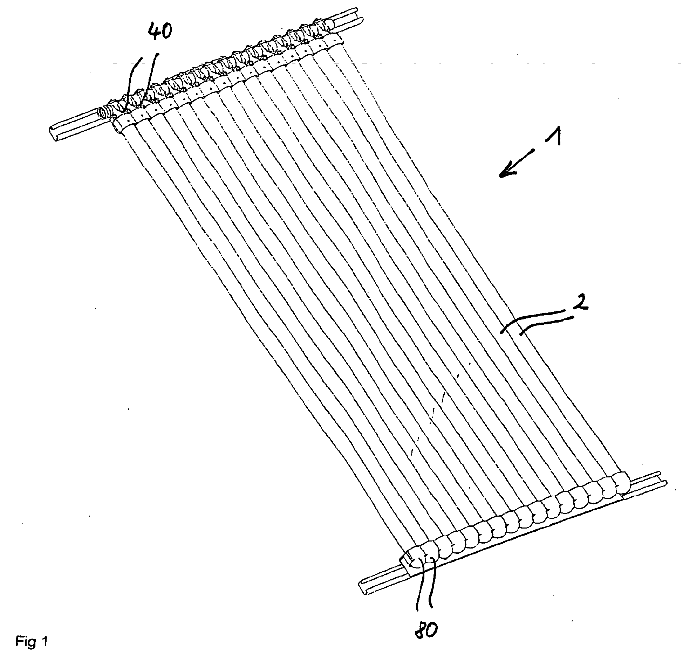

In der Fig. 1 ist ein Kollektormodul 1 mit Kollektorrohren 2 dargestellt, die an ihrem Kopfende jeweils einzelne miteinander verbundene Verbindungselemente 40 und an ihrem Fußende ebenfalls jeweils einzelne miteinander verbundene Fußkappen 80 aufweisen.

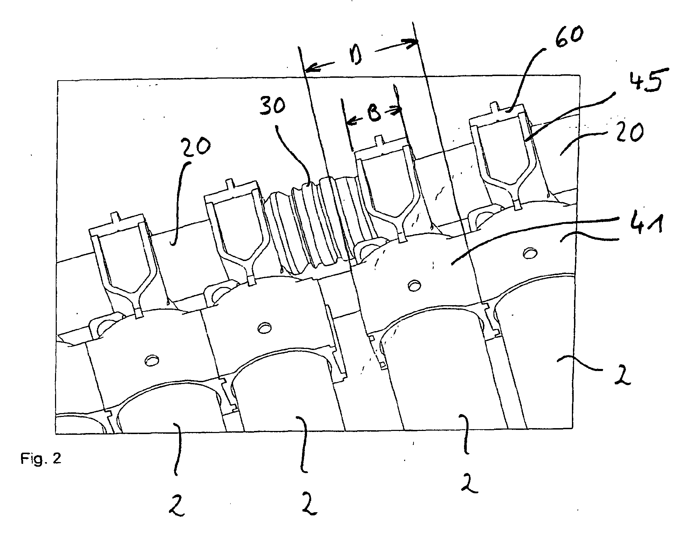

In der Fig. 2 ist ein vergrößerter Ausschnitt aus dem Kopfbereich des Kollektormoduls 1 dargestellt, so daß die Verbindungselemente 40, die nachfolgend eingehender beschrieben werden, deutlicher zu sehen sind Die Verbindungselemente 40 besitzen ein tassenförmiges Aufnahmeelement 41, in das das Kollektorrohr 2 eingeklebt ist. In Richtung Sammeleinrichtung, die hier als Sammelrohr 20 dargestellt ist, schließt sich ein U-förmiges Befestigungselement 45 an, das mit einem entsprechenden Verschlußelement 60 zusammenwirkt und das Sammelrohr 20 umgreift. Wie in der Fig. 2 zu sehen ist, ist die Breite B des U-förmigen Befestigungselementes 45 deutlich kleiner als der Außendurchmesser D des tassenförmigen Aufnahmeelementes 41, so daß zwischen zwei benachbarten Befestigungselementen 45 ein Freiraum verbleibt, so daß dort die Sammlerverbindung 30 angeordnet werden kann und dies nicht zu einer nennenswerten Vergrößerung des Rohrabstandes längs der Sammeleinrichtung 20 führt.

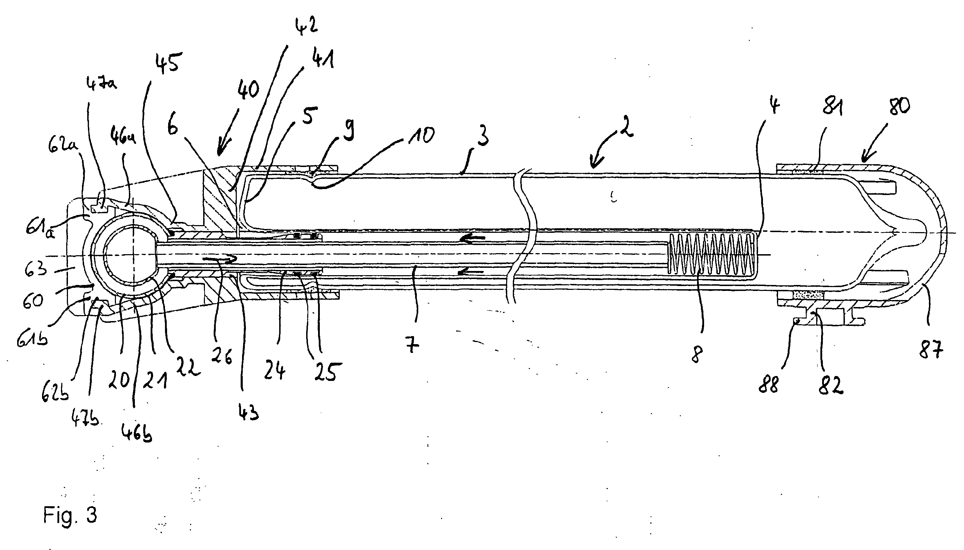

In der Fig. 3 ist ein Schnitt durch ein Kollektorrohr 2 mit aufgesetztem Verbindungselement 40, Sammelrohr 20 und Fußkappe 80 dargestellt. Das Kollektorrohr 2 besteht aus einem Hüllrohr 3, das über eine Verbindungswand 5 mit dem innenliegenden Absorberrohr 4 verschmolzen ist. Dieser Aufbau des Kollektorrohres 2 ist aus dem Stand der Technik bekannt. Das Innere des Absorberrohres 4 ist somit an der Öffnung 6 zugänglich, so daß dort ein Koaxialrohr 7 und ein Nippel 24 eingesteckt werden können.

Das Sammelrohr 20 besteht im wesentlichen aus einer Außenwand 21 und einem koaxial angeordneten Innenrohr 22, so daß zwei Kammern für den Zulauf und den Ablauf des Wärmeträgermediums gebildet werden. An diesem Sammelrohr 20 sind mehrere Nippel 24 angeordnet, die sich in radialer Richtung vom Sammelrohr 20 erstrecken. In der Fig. 3 ist einer dieser Nippel 24 dargestellt, der sich bis in das Absorberrohr 4 erstreckt, wo eine Abdichtung mittels zwei an der Außenseite des Nippels angeordneter O-Ringe 25 erfolgt. Ferner ist im Inneren des Nippels das Koaxialrohr 7 eingesetzt, das einerseits an einer Öffnung der Innenwand 22 anliegt und sich am anderen Ende an einer im Absorberrohr 4 angeordneten Feder 8 abstützt. Damit wird ein sicherer Halt dieses Koaxialrohres 7 gebildet. Das Wärmeträgermedium fließt in Pfeilrichtung 26 durch das Koaxialrohr 7, wird im Bereich der Feder 8 umgelenkt und fließt an der Außenseite des Koaxialrohres wieder in das Sammelrohr 20 zurück (Pfeilrichtung 27).

Das Verbindungselement 40 besitzt ein tassenförmiges Aufnahmeelement 41, in das das Hüllrohr 3 mittels einer Klebstoffschicht 9 eingeklebt ist. Die Klebstoffschicht 9 erstreckt sich bei dieser Ausführungsform nicht über die gesamte Innenfläche des tassenförmigen Aufnahmeelementes 41, weil das Hüllrohr 3 eine umlaufende Sicke 10 aufweist und eine Klebstoffschicht in diesem Bereich ausreicht, um eine sichere Fixierung des Kollektorrohres 2 zu gewährleisten. In der Bodenwand 42 des tassenförmigen Aufnahmeelementes 41 ist eine Öffnung 43 zur Aufnahme des Nippels 24 vorgesehen. An dem der Öffnung des tassenförmigen Aufnahmeelementes 41 gegenüberliegenden Ende ist das Befestigungselement 45 angeformt, das im wesentlichen zwei Schenkel 46a,b aufweist, die das Sammelrohr 20 maulförmig umgreifen. An den freien Enden dieser beiden Schenkel 46a,b sind Verriegelungselemente 47a,b angeordnet, die als Federn ausgebildet sind und mit entsprechenden Verriegelungselementen 62a,b an den Schenkeln 61a,b des Verschlußelementes 60 zusammenwirken. Diese Verriegelungselemente 62a,b sind dementsprechend als Nuten ausgebildet. Nuten und Federn erstrecken sich in Längsrichtung des Sammelrohres 20. An der freiliegenden Außenwand des Verschlußelementes 60 ist ein Griffstück 63 angeordnet, mit dem das als Schieber ausgebildete Verschlußelement 60 in Längsrichtung des Sammelrohres 20 verschoben werden kann, um die Verriegelung zu lösen, so daß das Kollektorrohr 2 zusammen mit dem Verbindungselement 40 von dem Nippel 24 und dem Sammelrohr 20 abgezogen werden kann.

Am gegenüberliegenden Ende des Kollektorrohres 2 ist die Fußkappe 80 angeordnet, die im Prinzip ein ähnliches tassenförmiges Aufnahmeelement umfaßt. In diese Fußkappe 80 ist das Kollektorrohr 2 bzw. das Hüllrohr 3 des Kollektorrohres 2 über die Klebstoffschicht 81 eingeklebt. Die Fußkappe 80 besitzt am unteren Ende einen Sockel 82 mit Halteelement 88, das zur Befestigung auf dem Dach dient. Im unteren Bereich der Wölbung der Fußkappe 80 ist eine Auslauföffnung 87 vorgesehen, damit sich eventuell zwischen dem Kollektorrohr 2 und der Fußkappe 80 sammelndes Regenwasser ungehindert ablaufen kann, was insbesondere dann von Vorteil ist, wenn eine geneigte Anordnung auf einem schrägen Dach vorgenommen wird.

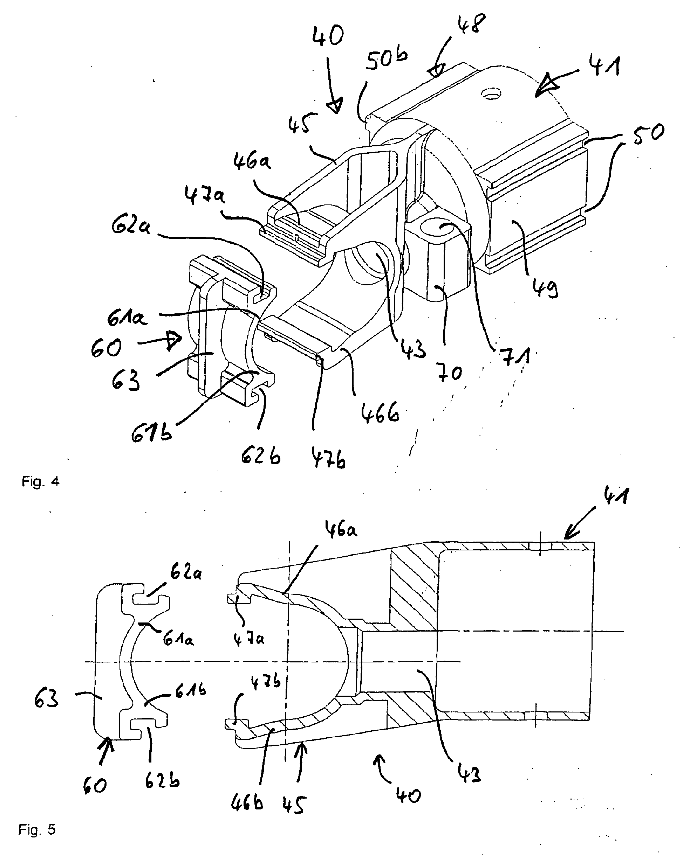

In der Fig. 4 ist eine perspektivische Ansicht eines Verbindungselementes 40 dargestellt. Das tassenförmige Aufnahmeelement 41 besitzt an den in Längsrichtung des Sammelrohrs 20 gegenüberliegend angeordneten Seitenwänden 48 und 49 Verriegelungselemente in Form von Nuten und Federn 50a,b. Die beiden Seitenwände 48,49 sind planparallel ausgebildet.

Wie in der Fig. 2 zu sehen ist, liegen benachbarte Wände 48,49 zweier nebeneinanderliegender tassenförmiger Aufnahmeelemente 41 unmittelbar aneinander, so daß die Federn der einen Wand in die Nuten der gegenüberliegenden Wand eingreifen und somit die Verbindungselemente 40 miteinander verriegeln und somit eine stabile Anordnung bilden.

Im Übergangsbereich zwischen dem tassenförmigen Aufnahmeelement 41 und dem U-förmigen Befestigungselement 45 ist seitlich ein Dachbefestigungselement 70 in Form eines Ringelementes mit einer Lochöffnung 71 angeordnet (s. Fig. 4). Die Lochöffnung 71 erstreckt sich senkrecht zur Längsrichtung des Sammelrohres 20, so daß dort ein Bolzen oder ähnliches durchgesteckt werden kann und somit eine Dachbefestigung ermöglicht wird. Auf der gegenüberliegenden Seite kann ein weiteres Dachhefestigungselement 70 angeordnet sein, es reicht jedoch in der Regel eines dieser Dachbefestigungselemente 70 pro Verbindungselement 40 aus. An den beiden Schenkeln 46a,b des U-förmigen Befestigungselementes 45 sind Verriegelungselemente 47a,b angeordnet, die in der hier gezeigten Ausführungsform aus Federn bestehen. Das dazugehörige Verschlußelement 60 ist ebenfalls gebogen ausgeführt und besitzt zwei Schenkel 61a,b, an deren Außenseite zwei Nuten 62a,b als Verriegelungselemente angeordnet sind, in die die entsprechenden Verriegelungselemente 47a,b des U-förmigen Befestigungselementes 45 eingreifen. Es wird somit ein Schieber gebildet, der in Längsrichtung des Sammelrohres 20 verschoben werden kann, um die Befestigung des Verbindungselementes 40 vom Sammelrohr 20 zu lösen. Hierzu ist vorzugsweise noch ein Griffelement 63 an der Außenseite angeformt.

In der Fig. 5 ist ein Schnitt durch ein solches Verbindungselement 40 dargestellt.

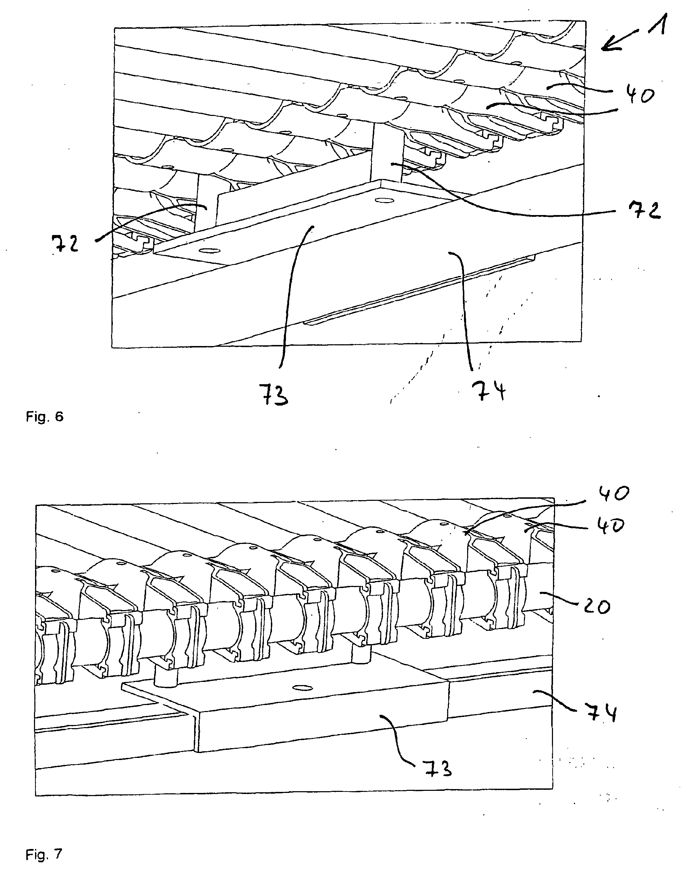

In der Fig. 6 ist die Unterseite eines Kollektormoduls 1 ausschnittsweise dargestellt. Durch die Lochöffnungen 71 der Dachbefestigungselemente 70 zweier Verbindungselemente 40 ist jeweils ein Bolzen 72 gesteckt, die mit einer L-Profilplatte 73 verschraubt sind. Diese L-Profilplatte 73 liegt auf einer Schiene 74 auf, die sich ebenfalls in Längsrichtung der Sammeleinrichtung 20 erstreckt, und ist mit dieser fest verschraubt. Wenn über diese L-Profilplatte 73 zwei benachbarte Kollektormodule fixiert werden, können sich im Falle der Wärmeausdehnung der Sammelrohre 20 diese in der Sammlerverbindung 30 ineinander verschieben.

In der Fig. 7 ist die Draufsicht auf die in Fig. 6 gezeigte Anordnung dargestellt.

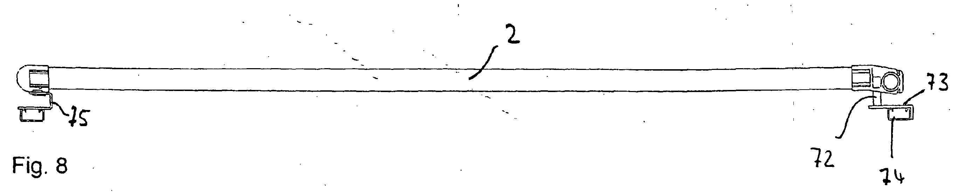

In der Fig. 8 ist ein Kollektorrohr 2 zusammen mit der Dachbefestigungsvorrichtung dargestellt. In der Lochöffnung 71 ist ein Bolzen 72 befestigt, der mit der L-Profilplatte 73 verschraubt ist. Diese Platte 73 liegt auf der Schiene 74 auf, wobei der kurze Schenkel an der Außenseite der Schiene 74 anliegt und einen Anschlag bildet. Am Fußende ist eine U-förmig gebogene Schiene 75 vorgesehen, in der die Fußkappe 80 mit ihrem Sockel 88 eingesteckt ist. Die Schiene 75 ist wiederum auf einer Schiene 74 befestigt. Bei dieser Art der Dachbefestigung wird das Kollektorrohr 2 zwischen den Schienen gespannt gehalten.

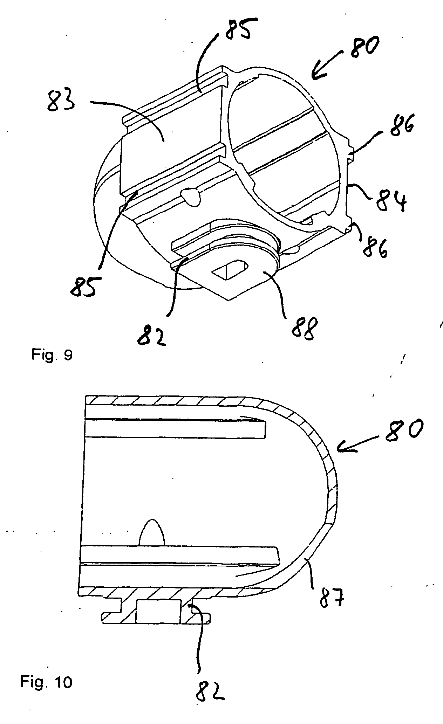

In der Fig. 9 ist eine perspektivische Unteransicht einer Fußkappe 80 dargestellt. Die Fußkappe besitzt zwei gegenüberliegende planparallele Außenwände 83 und 84, an denen Verriegelungselemente 86 und 85 in Form von Nuten und Federn angeordnet sind, so daß eine entsprechende Anordnung wie bei einem tassenförmigen Aufnahmeelement 41 realisiert wird und eine Verbindung mit benachbarten Fußkappen 80 möglich ist. An der Unterseite ist ein Sockel 82 angeformt, der über ein tellerförmiges Halteelement 88 mit der U-förmigen Schiene 75 verbunden werden kann. Am hinteren unteren Bereich ist die Auslauföffnung 87 dargestellt, die bereits im Zusammenhang mit der Fig. 3 erläutert wurde und in Fig. 10 dargetellt ist.

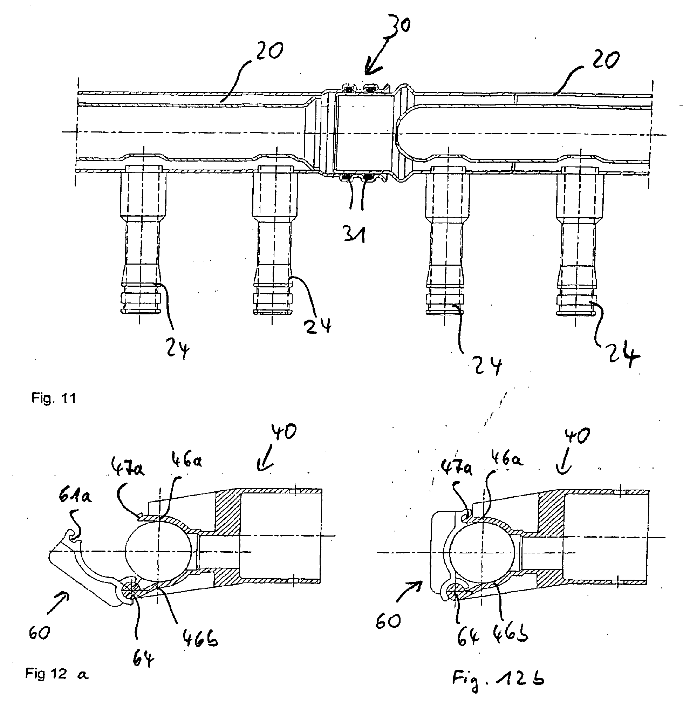

In der Fig. 11 ist die Verbindung 30 zweier Sammelrohre 20 dargestellt, die ineinandergesteckt werden, wobei die Abdichtung über zwei O-Ringe 31a erfolgt.

In der Fig. 12 ist eine weitere Ausführungsform eines Verbindungselementes 40 dargestellt, die sich von der in der Fig. 4 gezeigten Ausführungsform dadurch unterscheidet, daß das Verschlußelement 60 über ein Scharnier 64 am freien Ende des Schenkels 46b schwenkbar angelenkt ist. Am oberen Schenkel 46a ist ein Verriegelungselement 47a angeordnet, das beim Einklappen des Verschlußelementes 60 mit einem entsprechenden Verriegelungselement 61a verrastet und somit die in der Fig. 12b gezeigte Schließposition einnimmt.

### Bezugszeichen

- 1: Kollektormodul
- 2: Kollektorrohr
- 3: Hüllrohr
- 4: Absorberrohr
- 5: Verbindungswand
- 6: Öffnung
- 7: Koaxialrohr
- 8: Feder
- 9: Klebstoffschicht
- 10: Sicke
- 20: Sammelrohr
- 21a,b: Außenwand
- 22: Innenrohr
- 24: Nippel
- 25: O-Ring
- 26: Pfeilrichtung
- 27: Pfeilrichtung
- 30: Sammlerverbindung
- 31: O-Ring
- 40: Verbindungselement
- 41: tassenförmiges Aufnahmeelement
- 42: Bodenwand
- 43: Öffnung
- 45: U-förmiges Befestigungselement
- 46a,b: Schenkel
- 47a,b: Verriegelungselement
- 48: Seitenwand
- 49: Seitenwand
- 50a: Nut
- 50b: Feder
- 60: Verschlußeinrichtung
- 61a,b: Schenkel
- 62a,b: Verriegelungselement
- 63: Griffstück
- 70: Dachbefestigungselement
- 71: Lochöffnung
- 72: Bolzen
- 73: L-Profilplatte
- 74: Schiene
- 75: Schiene
- 80: Fußkappe
- 81: Klebstoffschicht
- 82: Sockel
- 83: Seitenwand
- 84: Seitenwand
- 85: Verriegelungselement
- 86: Verriegelungselement
- 87: Ablauföffnung
- 88: Halteelement

## Patentansprüche

1. Kollektormodul (1) mit einer zwei Kammern aufweisenden Sammeleinrichtung, insbesondere Sammelrohr (20), die mindestens einen senkrecht zur Sammeleinrichtung angeordneten Nippel (24) aufweist, mit mindestens einem Kollektorrohr (2), das ein Hüllrohr (3) und ein Absorberrohr (4) aufweist, wobei das Absorberrohr (4) auf dem Nippel (24) aufgesteckt ist und im Nippel (24) ein Koaxialrohr (7) angeordnet ist, das einerseits im Absorberrohr (4) und andererseits im Sammelrohr (20) fixiert ist, und mit einem die Sammeleinrichtung umgreifenden und das Ende des Hüllrohrs (3) aufnehmenden Verbindungselement (40), **dadurch gekennzeichnet, daß** für jedes Kollektorrohr (2) ein eigenes Verbindungselement (40) vorgesehen ist, das ein tassenförmiges Aufnahmeelement (41) aufweist, in das das Hüllrohr (3) eingeklebt ist,
daß am tassenförmigen Aufnahmeelement (41) ein U-förmiges Befestigungselement (45) mit zwei Schenkeln (46a,b) angeformt ist, das die Sammeleinrichtung (20) umgreift, und
daß am Befestigungselement (45) eine Verschlußeinrichtung (60) angeordnet ist.

2. Kollektormodul nach Anspruch 1, **dadurch gekennzeichnet, daß** die Verschlußeinrichtung (60) ein in Längsrichtung des Sammelrohres (20) beweglicher Schieber ist.

3. Kollektormodul nach Anspruch 2, **dadurch gekennzeichnet, daß** am freien Ende der beiden Schenkel (46a,b) des U-förmigen Befestigungselementes (45) Verriegelungselemente (47a,b) angeordnet sind, die mit Verriegelungselementen (62a,b) des Schiebers (60) zusammenwirken.

4. Kollektormodul nach Anspruch 3, **dadurch gekennzeichnet, daß** die Verriegelungselemente (47a,b,62a,b) aus Nut und Feder bestehen.

5. Kollektormodul nach Anspruch 4, **dadurch gekennzeichnet, daß** sich die Nuten und Federn (47a,b,62a,b) in Längsrichtung des Sammelrohres (20) erstrecken.

6. Kollektormodul nach Anspruch 1, **dadurch gekennzeichnet, daß** die Verschlußeinrichtung (60) ein am Befestigungselement angelenktes Schwenkelement ist.

7. Kollektormodul nach einem der Ansprüche 1 bis 6, **dadurch gekennzeichnet, daß** die sich in Längsrichtung des Sammelrohrs (20) erstreckende Breite B des U-förmigen Befestigungselementes (45) kleiner als der Außendurchmesser D des tassenförmigen Aufnahmeelementes (41) ist.

8. Kollektormodul nach einem der Ansprüche 1 bis 7, **dadurch gekennzeichnet, daß** das tassenförmige Aufnahmeelement (41) an der Außenseite seiner in Richtung des Sammelrohrs (20) gegenüberliegenden Seitenwänden (48,49) Verriegelungselemente (50a,b) aufweist, die mit Verriegelungselementen (50a,b) eines benachbarten tassenförmigen Aufnahmeelementes (41) zusammenwirken.

9. Kollektormodul nach einem der Ansprüche 1 bis 8, **dadurch gekennzeichnet, daß** am Verbindungselement (40) im Übergangsbereich vom tassenförmigen Aufnahmeelement (41) und U-förmigen Befestigungselement (45) ein Dachbefestigungselement (70) angeordnet ist.

10. Kollektormodul nach Anspruch 9, **dadurch gekennzeichnet, daß** das Dachbefestigungselement (70) mindestens ein Ringelement mit senkrecht zur Längsachse des Verbindungselementes (40) angeordneter Lochöffnung (71) ist.

11. Kollektormodul nach einem der Ansprüche 1 bis 9, **dadurch gekennzeichnet, daß** am geschlossenen Ende des Kollektorrohres (2) eine Fußkappe (80) aufgeklebt ist.

12. Kollektormodul nach Anspruch 11, **dadurch gekennzeichnet, daß** die Fußkappe (80) eine Ablauföffnung (87) aufweist.

13. Kollektormodul nach Anspruch 11 oder 12, **dadurch gekennzeichnet, daß** die Fußkappe (80) an der Außenseite ihrer gegenüberliegenden Seitenwände (83,84) Verriegelungselemente (85,86) aufweist, die mit Verriegelungselementen (85,86) benachbarter Fußkappen (80) zusammenwirken.

14. Kollektorrnodul nach Anspruch 13, **dadurch gekennzeichnet, daß** die Verriegelungselemente (85,86) aus Nuten und Federn bestehen.

15. Kollektormodul nach einem der Ansprüche 11 bis 14, **dadurch gekennzeichnet, daß** die Fußkappe (80) einen Sockel (82) mit mindestens einem Halteelement (88) aufweist.

## Claims

1. Collector module (1), with a header device, in particular header tube (20), which has two chambers and has at least one nipple (24) arranged perpendicularly to the header device, with at least one collector tube (2) which has a casing tube (3) and an absorber tube (4), the absorber tube (4) being plugged on the nipple (24), and the nipple (24) having arranged in it a coaxial tube (7) which is fixed in the absorber tube (4), on the one hand, and in the header tube (20), on the other hand, and with a connection element (40) surrounding the header device and receiving the end of the casing tube (3), **characterized in that**, for each collector tube (2), a specific connection element (40) is provided, having a cup-shaped reception element (41) into which the casing tube (3) is adhesively bonded, **in that** a U-shaped fastening element (45) having two legs (46a,b) is integrally formed on the cup-shaped reception element (41) and surrounds the header device (20), and **in that** a closing device (60) is arranged on the fastening element (45).

2. Collector module according to Claim 1, **characterized in that** the closing device (60) is a slide movable in the longitudinal direction of the header tube (20).

3. Collector module according to Claim 2, **characterized in that** locking elements (47a,b) which cooperate with locking elements (62a,b) of the slide (60) are arranged at the free end of the two legs (46a, b) of the U-shaped fastening element (45).

4. Collector module according to Claim 3, **characterized in that** the locking elements (47a,b, 62a,b) consist of groove and tongue.

5. Collector module according to Claim 4, **characterized in that** the grooves and tongues (47a,b, 62a,b) extend in the longitudinal direction of the header tube (20).

6. Collector module according to Claim 1, **characterized in that** the closing device (60) is a pivoting element articulated on the fastening element.

7. Collector module according to one of Claims 1 to 6, **characterized in that** the width B, extending in the longitudinal direction of the header tube (20), of the U-shaped fastening element (45) is smaller than the outside diameter D of the cup-shaped reception element (41).

8. Collector module according to one of Claims 1 to 7, **characterized in that** the cup-shaped reception element (41) has, on the outside of its side walls (48, 49) located opposite one another in the direction of the header tube (20), locking elements (50a,b) which cooperate with locking elements (50a,b) of an adjacent cup-shaped reception element (41).

9. Collector module according to one of Claims 1 to 8, **characterized in that** a roof fastening element (70) is arranged on the connection element (40) in the transitional region of the cup-shaped reception element (41) and U-shaped fastening element (45).

10. Collector module according to Claim 9, **characterized in that** the roof fastening element (70) is at least one annular element with a hole orifice (71) arranged perpendicularly to the longitudinal axis of the connection element (40).

11. Collector module according to one of Claims 1 to 9, **characterized in that** a foot cap (80) is adhesively bonded on the closed end of the collector tube (2).

12. Collector module according to Claim 11, **characterized in that** the foot cap (80) has a run-off orifice (87).

13. Collector module according to Claim 11 or 12, **characterized in that** the foot cap (80) has, on the outside of its side walls (83, 84) located opposite one another, locking elements (85, 86) which cooperate with locking elements (85, 86) of adjacent foot caps (80).

14. Collector module according to Claim 13, **characterized in that** the locking elements (85, 86) consist of grooves and tongues.

15. Collector module according to one of Claims 11 to 14, **characterized in that** the foot cap (80) has a base (82) with at least one holding element (88).

## Revendications

1. Module de collecteur (1) comprenant un dispositif collecteur présentant deux chambres, notamment un tube collecteur (20), qui présente au moins un raccord fileté (24) disposé perpendiculairement au dispositif collecteur, avec au moins un tube de collecteur (2) qui présente un tube de gainage (3) et un tube d'absorption (4), le tube d'absorption (4) étant enfoncé sur le raccord fileté (24) et un tube coaxial (7) étant disposé dans le raccord fileté (24), lequel d'une part est fixé dans le tube d'absorption (4) et d'autre part dans le tube collecteur (20), et avec un élément de connexion (40) venant en prise autour du dispositif collecteur et recevant l'extrémité du tube de gainage (3), **caractérisé en ce que** pour chaque tube de collecteur (2), on prévoit un élément de connexion propre (40), lequel présente un élément de réception (41) en forme de tasse dans lequel est collé le tube de gainage (3),
**en ce que** sur l'élément de réception en forme de tasse (41) est moulé un élément de fixation en forme de U (45) avec deux branches (46a,b), qui vient en prise autour du dispositif collecteur (20), et
**en ce qu'**un dispositif de fermeture (60) est disposé sur l'élément de fixation (45).

2. Module de collecteur selon la revendication 1, **caractérisé en ce que** le dispositif de fermeture (60) est un coulisseau déplaçable dans la direction longitudinale du tube collecteur (20).

3. Module de collecteur selon la revendication 2, **caractérisé en ce que** des éléments de verrouillage (47a,b) sont disposés à l'extrémité libre des deux branches (46a,b) de l'élément de fixation (45) en forme de U, lesquels coopèrent avec des éléments de verrouillage (62a,b) du coulisseau (60).

4. Module de collecteur selon la revendication 3, **caractérisé en ce que** les éléments de verrouillage (47a,b, 62a,b) se composent de rainures et languettes.

5. Module de collecteur selon la revendication 4, **caractérisé en ce que** les rainures et languettes (47a,b, 62a,b) s'étendent dans la direction longitudinale du tube collecteur (20).

6. Module de collecteur selon la revendication 1, **caractérisé en ce que** le dispositif de fermeture (60) est un élément pivotant articulé sur l'élément de fixation.

7. Module de collecteur selon l'une quelconque des revendications 1 à 6, **caractérisé en ce que** la largeur B de l'élément de fixation en forme de U (45) s'étendant dans la direction longitudinale du tube collecteur (20) est inférieure au diamètre extérieur D de l'élément de réception en forme de tasse (41).

8. Module de collecteur selon l'une quelconque des revendications 1 à 7, **caractérisé en ce que** l'élément de réception en forme de tasse (41) présente, sur le côté extérieur de ses parois latérales (48, 49) opposées dans la direction du tube collecteur (20), des éléments de verrouillage (50a,b) qui coopèrent avec des éléments de verrouillage (50a,b) d'un élément de réception en forme de tasse (41) adjacent.

9. Module de collecteur selon l'une quelconque des revendications 1 à 8, **caractérisé en ce qu'**un élément de fixation au toit (70) est disposé sur l'élément de connexion (40) dans la région de transition de l'élément de réception en forme de tasse (41) et de l'élément de fixation en forme de U (45).

10. Module de collecteur selon la revendication 9, **caractérisé en ce que** l'élément de fixation au toit (70) est au moins un élément annulaire avec une ouverture de trou (71) disposée perpendiculairement à l'axe longitudinal de l'élément de connexion (40).

11. Module de collecteur selon l'une quelconque des revendications 1 à 9, **caractérisé en ce qu'**une calotte pour pied (80) est collée à l'extrémité fermée du tube de collecteur (2).

12. Module de collecteur selon la revendication 11, **caractérisé en ce que** la calotte pour pied (80) présente une ouverture de sortie (87).

13. Module de collecteur selon la revendication 11 ou 12, **caractérisé en ce que** la calotte pour pied (80) présente, sur le côté extérieur de ses parois latérales opposées (83, 84), des éléments de verrouillage (85, 86) qui coopèrent avec des éléments de verrouillage (85, 86) de calottes pour pieds (80) adjacentes.

14. Module de collecteur selon la revendication 13, **caractérisé en ce que** les éléments de verrouillage (85, 86) se composent de rainures et languettes.

15. Module de collecteur selon l'une quelconque des revendications 11 à 14, **caractérisé en ce que** la calotte pour pied (80) présente un socle (82) avec au moins un élément de fixation (88).
